# DEMANDE DE BREVET EUROPEEN

(11) **EP 4 390 930 A1**
(43) Date de publication de la demande: **26.06.2024**
(21) Numéro de dépôt: 23218362.4
(22) Date de dépôt: 19.12.2023
(51) Int. Cl.: G11C 7/24, G06F 21/79, G11C 7/20, G11C 11/419, G11C 5/02, G11C 7/10, G11C 7/18, G11C 8/08, G11C 29/24, G11C 29/44

(54) **SRAM AVEC MISE EN VEILLE DE SECTEUR DEDIE AU PUF**

(30) Priorité: 21.12.2022 FR 2214117
(71) Demandeur: Commissariat à l'énergie atomique et aux énergies alternatives, 75015 Paris (FR)
(72) Inventeur: NOEL, Jean-Philippe, 38054 GRENOBLE CEDEX 09 (FR); GERBAUD, Merlin, 38054 GRENOBLE CEDEX 09 (FR); GIRAUD, Bastien, 38054 GRENOBLE CEDEX 09 (FR); CIAMPOLINI, Lorenzo, 38054 GRENOBLE CEDEX 09 (FR)
(74) Mandataire: Brevalex

(57) **Abrégé**

Dispositif de mémoire statique à accès aléatoire comprenant une matrice mémoire (M) dotée de cellules mémoires SRAM chacune desdites cellules dudit ensemble comprenant un premier noeud (N_{T}) de stockage et un deuxième noeud (N_{F}) de stockage, le dispositif étant doté en outre d'un circuit de commande (160, 180, 120, T₁) desdites cellules configuré pour, après une mise sous tension de la matrice (M), mettre la matrice dans un premier mode de fonctionnement dans lequel un premier ensemble (E1) de cellules situé dans une première zone (Z1) de la matrice dans un état dit « métastable » pour lequel le premier noeud (N_{T}) de stockage et ledit deuxième noeud (N_{F}) de stockage sont mis à des potentiels égaux ou sensiblement égaux tandis qu'un deuxième ensemble (E2) de cellules situé dans une deuxième zone (Z2) de la matrice (M) distincte de la première zone (Z1) ont leurs premier noeud (N_{T}) et deuxième noeud (N_{T}) respectifs à des potentiels respectifs différents et correspondant à un état logique donné entre un état bas et un état haut et à un état logique complémentaire dudit état donné.

## Description

### DOMAINE TECHNIQUE

La présente invention se rapporte au domaine des mémoires, et en particulier de type SRAM (SRAM pour « *Static **Random** Access Memory* » ou mémoire vive statique à accès aléatoire), et introduit des moyens de commande d'une mémoire pour placer au moins un secteur donné de cellules de cette mémoire dans un mode de fonctionnement particulier tandis que dans d'autres secteurs, les cellules sont librement accessibles en lecture.

### ÉTAT DE LA TECHNIQUE ANTÉRIEURE

Les transistors en technologie PMOS subissent un phénomène physique appelé NBTI (en anglais « *Negative-Bias Température Instability »,* c'est à dire *« Instabilité de température en polarisation négative* »), qui a pour effet d'augmenter leur tension de seuil, ceci d'autant plus lorsque leurs dimensions sont réduites. Ce phénomène est par ailleurs accéléré quand la température et/ou la tension négative VGS appliquée entre la grille et la source du transistor augmentent.

Une cellule mémoire SRAM est communément dotée de deux inverseurs connectés de façon croisée tête-bêche, chacun étant formé notamment d'un premier transistor de type P et d'un deuxième transistor de type N.

La valeur mémorisée dans une cellule mémoire SRAM va influencer différemment les transistors PMOS d'une cellule mémoire et le ratio VTP1/VTP2 des tensions de seuil respectives des deux PMOS va évoluer dans le temps dans un sens ou dans l'autre en fonction de la valeur mémorisée.

Ainsi, le phénomène NBTI influence la probabilité d'une cellule SRAM à s'initialiser spontanément lors de sa mise sous tension au niveau logique '1' ou à son niveau opposé '0', étant donné que le niveau logique d'initialisation est lié au ratio VTP1/VTP2.

Or, des données mémoires issues de l'initialisation de cellules SRAM peuvent être utilisées pour générer des clés de chiffrement ou un identifiant matériel ou une empreinte numérique unique. Elles peuvent être utilisées pour constituer ainsi une fonction physique non clonable (PUF pour « Physical Unclonable Function »).

Certaines cellules présentant un fort ratio VTP1/VTP2 peuvent être en particulier identifiées comme cellules suffisamment stables pour être utilisées pour constituer une fonction PUF lors d'une phase dite d'enrôlement (« enrollment » selon la terminologie anglo-saxonne). Néanmoins, à cause des effets du phénomène NBTI précité, le ratio VTP1/VTP2 peut avec le temps être amené à être modifié, ce qui rend les cellules moins propices à leur utilisation pour constituer un PUF, dont un des prérequis est la stabilité temporelle sur long terme. Pour limiter une telle dégradation avec le temps des cellules SRAM, une technique consiste à inverser le contenu de rangées horizontales de cellules mémoire de manière régulière. Une telle technique induit une augmentation de la consommation et s'avère pénalisant en termes de temps auquel le système peut avoir accès aux cellules mémoires. Des techniques d'inversion de bit sont présentées dans le document *"Impact of NBTI on SRAM Read Stability and Design for Reliability",* de S. Kumar et al., ISQED 2006 ou dans le document "A Secure Data-Toggling SRAM for Confidential Data Protection*",* de W.-G. Ho et al., IEEE TCAS-I 2019. Dans ce dernier document, la solution proposée a pour inconvénient de modifier la structure de cellule en ajoutant des transistors supplémentaires. Dans tous les cas, l'inversion périodique des bits entraîne une perte de temps et d'énergie au circuit utilisateur de mémoire.

Une problématique liée aux effets du NBTI est l'effet dit « d'impression des données » (« *data imprint effect* »). Un tel effet est décrit dans le document : *"*Challenging On-Chip SRAMSecurity with Boot-State Statistics", de J. McMahan et al., HOST 2017. Lorsqu'une donnée stockée en mémoire y reste longtemps, et de surcroît en état de suralimentation électrique, la tension de seuil VTP du transistor PMOS passant évolue, dû au même effet physique qui cause le NBTI. Un effet de rémanence néfaste ou « d'impression des données » (« data imprint » en anglais) fait alors qu'il peut être possible de retrouver une donnée qui a été stockée préalablement même lorsque la mémoire est réinitialisée.

Il se pose le problème de réaliser un dispositif mémoire amélioré vis-à-vis d'au moins une des problématiques évoquées ci-dessus.

### EXPOSÉ DE L'INVENTION

Un mode de réalisation de la présente invention prévoit un dispositif de mémoire statique à accès aléatoire comprenant une matrice mémoire dotée de cellules mémoires SRAM chacune desdites cellules dudit ensemble comprenant un premier noeud de stockage et un deuxième noeud de stockage, le dispositif étant doté en outre d'un circuit de commande desdites cellules configuré pour, après une mise sous tension de la matrice, mettre la matrice dans un premier mode de fonctionnement dans lequel un premier ensemble de cellules situé dans une première zone de la matrice est dans un état indéterminé dit « métastable » pour lequel leur premier noeud de stockage et leur deuxième noeud de stockage respectifs sont mis à des potentiels égaux ou sensiblement égaux tandis qu'un deuxième ensemble de cellules situé dans une deuxième zone de la matrice distincte de la première zone sont dans un état déterminé dans lequel, suite à une opération d'initialisation ou d'écriture, leurs premier noeud et deuxième noeud respectifs sont à des potentiels respectifs différents entre un état bas, correspondant en particulier à un état logique donné '0', et un état haut, correspondant à un état logique complémentaire '1', permettant en particulier la mémorisation d'une valeur par les cellules de cette deuxième zone.

En mettant les cellules en état métastable on se prémunit des effets néfastes du NBTI.

Un tel mode de fonctionnement est particulièrement avantageux lorsque le premier ensemble de cellules contient une fonction physique non clonable (PUF). En mettant les cellules dédiées aux PUF en état métastable on évite ainsi tout possible dérive dans leur état d'initialisation, évitant donc de fausser une clé ou signature numérique associée à ces cellules.

Avantageusement, consécutivement à la mise sous tension de la matrice au moins une grille ou ligne conductrice est mise à un potentiel d'alimentation.

Le circuit de commande peut être doté d'au moins un élément interrupteur apte, alternativement, à connecter ou déconnecter une ligne d'alimentation de cellules dudit premier ensemble à ladite grille ou ligne conductrice, et les cellules sont mises dans l'état métastable en déconnectant la ligne d'alimentation de ladite grille ou ligne conductrice.

Ainsi, outre le fait de ne pas pouvoir lire leur donnée logique on évite ici que les cellules mises dans un état métastable ne consomment de manière inopportune.

Avantageusement, les cellules du premier ensemble peuvent être mises dans ledit état « métastable » par mise en connexion l'un à l'autre de leur premier noeud de stockage et deuxième noeud de stockage respectifs.

Selon une possibilité de mise en oeuvre, chaque cellule dudit premier ensemble peut être dotée :
- d'un premier inverseur et d'un deuxième inverseur connectés de façon croisée entre ledit premier noeud de stockage et ledit deuxième noeud de stockage, le premier inverseur et/ou le deuxième inverseur étant connectés à une ligne d'alimentation dite « haute » pouvant être mise à un potentiel d'alimentation,
- d'un premier transistors d'accès au premier noeud de stockage et d'un deuxième transistor d'accès au deuxième noeud de stockage, le premier transistor d'accès et le deuxième transistor d'accès étant respectivement connectés à une première ligne de bit et à une deuxième ligne,
le circuit de commande est doté d'au moins un élément commutateur apte, alternativement à connecter entre elles ou déconnecter l'une de l'autre la première ligne de bit et la deuxième ligne de bit, les cellules du premier ensemble étant mises dans ledit état métastable par ledit circuit de commande en activant les transistors d'accès et en connectant l'une à l'autre la première ligne de bit avec la deuxième ligne de bit.

Selon un mode de réalisation le dispositif peut comprendre en outre un module destiné à produire une signature numérique et/ou une clef d'encryptage à partir de données mémorisées dans des cellules dudit premier ensemble de cellules, ledit module étant apte à produire un signal de demande d'accès au premier ensemble de cellules, le circuit de commande étant configuré pour consécutivement à la réception dudit signal de demande d'accès, mettre les cellules dudit premier ensemble de cellules dans un état d'accessibilité en lecture ou dans un état permettant une opération de mémorisation d'une valeur après une opération d'initialisation et dans un état d'accessibilité en lecture, en :
- déconnectant ou isolant l'un de l'autre le premier noeud du deuxième noeud de chaque cellule du deuxième ensemble ou,
- appliquant un potentiel d'alimentation aux cellules du premier ensemble, ou
- isolant le premier noeud du deuxième noeud de chaque cellule du premier ensemble tout en appliquant un potentiel d'alimentation aux cellules du premier ensemble.

Avantageusement, pour mettre les cellules dudit premier ensemble de cellules dans un état d'accessibilité en lecture les cellules du premier ensemble peuvent être initialisées préalablement en désactivant leur premier transistor d'accès et deuxième transistor d'accès tout en mettant la ligne d'alimentation haute au potentiel d'alimentation afin d'alimenter leur premier inverseur et leur deuxième inverseur.

Selon une mise en oeuvre possible, le circuit de commande peut être configuré pour que lorsque les cellules dudit premier ensemble de cellules sont dans un état d'accessibilité en lecture, consécutivement à une détection d'un signal d'accès frauduleux, mettre le premier ensemble de cellules situé dans une première zone de la matrice dans ledit état « métastable ».

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels:
La figure 1 illustre un plan mémoire SRAM doté d'une zone formée d'un ensemble de cellules susceptibles d'être mises en veille par placement dans un état métastable pendant que d'autres zones de la mémoire sont librement accessibles en lecture.
La figure 2 illustre une structure particulière de cellule SRAM pour la mettre dans un état métastable par égalisation de ses noeuds internes.
La figure 3 illustre une cellule mémoire SRAM susceptible d'être intégrée dans un dispositif mémoire suivant l'invention.
La figure 4A illustre une manière de placer une cellule SRAM de structure conventionnelle en état métastable en déconnectant son alimentation d'une alimentation du plan mémoire.
La figure 4B illustre une manière de placer une cellule SRAM en état métastable par égalisation de ses noeuds internes en connectant entre elles des lignes de bits auxquelles cette cellule est reliée.
La figure 4C illustre une variante préférée dans lequel l'état métastable est obtenu par égalisation de ses noeuds internes et en déconnectant son alimentation d'une alimentation du plan mémoire.
La figure 5 donne un exemple de chronogramme illustrant un exemple de fonctionnement de différentes zones de la mémoire et un mode de fonctionnement dans lequel un secteur particulier de la mémoire contient des cellules mises dans un état métastable afin de limiter l'influence du phénomène de NBTI tandis que d'autres secteurs sont accessibles en lecture.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

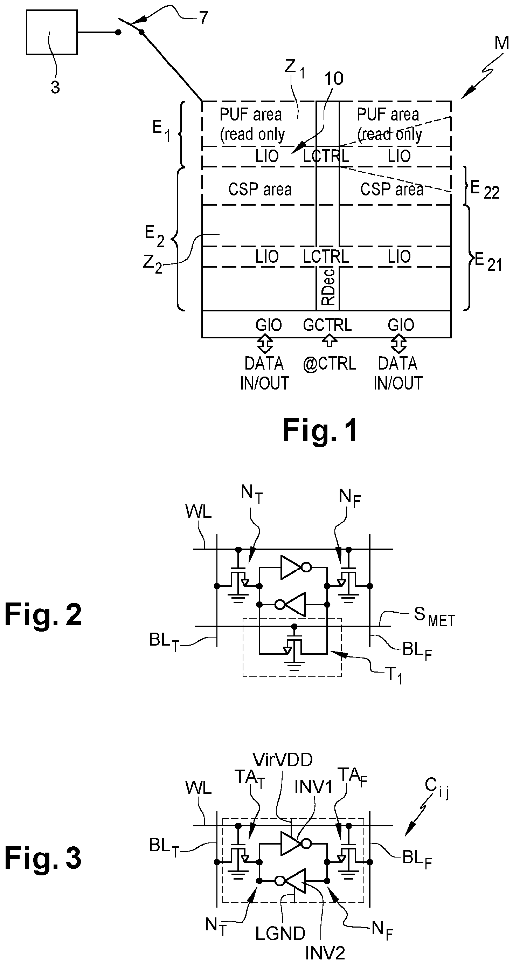

Un plan mémoire est représenté de manière schématique sur la figure 1 et comprend une matrice M de cellules mémoire. La matrice est formée typiquement d'une pluralité de lignes et de colonnes de cellules SRAM (non représentées sur cette figure).

On distingue ici deux zones Z1, Z2 dans la matrice M, formées chacune d'un ensemble de cellules.

La mémoire comporte en particulier un premier ensemble E1 de cellules situé dans une première zone Z1 de la matrice et que l'on souhaite particulièrement protéger des phénomènes de NBTI évoqués précédemment.

Selon un mode de réalisation particulier, la première zone Z1 contient des cellules destinées à réaliser une fonction physique non-clonable (PUF) et dont l'état logique, en particulier l'état logique d'initialisation, est susceptible de servir pour former une signature numérique ou une empreinte numérique de la mémoire.

Pour pallier les phénomènes de NBTI et de vieillissement, le dispositif mémoire est doté d'un circuit de commande 10 configuré pour, après mise sous tension de la matrice ou alors que la matrice est mise sous tension et reliée à une alimentation dite « générale » (représentée de manière schématique par un bloc 3), placer le premier ensemble E1 de la première zone de la matrice M1 dans un état particulier dit « métastable » dans lequel on ne peut distinguer l'état logique respectif des cellules de cet ensemble.

La mémoire comporte également un deuxième ensemble E2 situé dans une deuxième zone Z2 de la matrice qui, lorsque le premier ensemble E1 de la première zone de la matrice M1 est mis dans un état métastable, peut être quant à lui mis dans un mode de fonctionnement où les cellules sont librement accessibles en lecture et en écriture. Le deuxième ensemble E2 occupe une deuxième zone Z2 de la matrice typiquement plus importante en termes de taille que la première zone Z1.

Le deuxième ensemble E2 peut être formé de plusieurs sous-ensembles E21, E22 et avantageusement comporter un sous-ensemble E22 de cellules pouvant stocker des données sensibles CSP (pour « Critical Security Parameters » ou paramètre de sécurité critique).

Une manière de placer une cellule mémoire dans ledit état métastable consiste par exemple à connecter entre eux ses noeuds internes N_{T}, N_{F}.

Dans l'exemple de réalisation particulier illustré sur la figure 2 cette technique utilise l'ajout d'un transistor T₁ au niveau de la cellule mémoire qui permet alternativement de connecter entre eux ou déconnecter l'un de l'autre les noeuds internes N_{T}, N_{F} en fonction de l'état d'un signal S_{MET}. Lorsque les noeuds internes N_{T}, N_{F} sont égalisés (transistor T₁ rendu passant), on effectue l'équivalent d'une opération d'effacement de la cellule mémoire. Si on devait réaliser une opération de lecture avec les noeuds ainsi reliés, on aurait sensiblement 50% de probabilité de lire une valeur « 1 » et 50% de probabilité de lire une valeur « 0 », et quoi qu'il en soit la valeur lue ne correspond plus du tout à celle ayant pu être mémorisée préalablement à l'opération d'égalisation. Le transistor T₁ sera rendu non passant après « effacement » des noeuds N_{T}, N_{F} pour pouvoir « réinitialiser » la cellule et la remettre dans une configuration lui permettant d'être à nouveau accessible en mode « normal » d'écriture et de lecture.

On peut préférer conserver un agencement conventionnel des cellules, sans modification de leur structure interne, afin notamment de limiter l'encombrement. Dans ce cas, la mise en état « métastable » peut se faire par d'autres moyens comme cela est précisé ci-après.

Ainsi, sur la figure 3, une cellule de structure conventionnelle SRAM Cᵢⱼ est représentée avec ses deux noeuds de stockage N_{T} et N_{F}, prévus pour conserver une première information logique, et une information logique complémentaire de la première information. Le maintien des informations logiques dans les noeuds est assuré par des transistors formant des inverseurs INV1, INV2 bouclés sur eux-mêmes. Par exemple, lorsque la cellule SRAM est de type communément appelé « 6T » et formée ainsi de 6 transistors. Les deux inverseurs INV1, INV2, sont typiquement réalisés par deux transistors de charge et deux transistors de conduction. Les inverseurs INV1, INV2 sont connectés à une première ligne d'alimentation, en particulier une ligne d'alimentation VirVDD dite « haute », et à une deuxième ligne d'alimentation LGND, en particulier une ligne d'alimentation dite « basse ».

La cellule Cᵢⱼ reçoit une alimentation par le biais de la ligne d'alimentation haute VirVDD lorsqu'elle est reliée à une alimentation générale du plan mémoire, par exemple mise à un potentiel VDD. L'accès aux noeuds de stockage N_{T} et N_{F} est réalisé par le biais de deux transistors d'accès TA_{T} et TA_{F} connectés respectivement à des lignes de bit BL_{T} et BL_{F} généralement partagées par les cellules SRAM d'une même colonne de cellules du plan matriciel. Cet accès aux noeuds de stockage N_{T} et N_{F} est commandé par une ligne de mot WL généralement partagée par les cellules SRAM d'une même ligne de cellules du plan matriciel. Les transistors d'accès TA_{T} et TA_{F} sont ainsi prévus pour permettre, lorsqu'ils sont activés (i.e. rendus passants), d'accéder au premier noeud N_{T} et au deuxième noeud N_{F}, et lorsqu'ils sont désactivés, de bloquer l'accès au premier noeud N_{T} et au deuxième noeud N_{F} depuis les lignes de bit BL_{T} et BL_{F}.

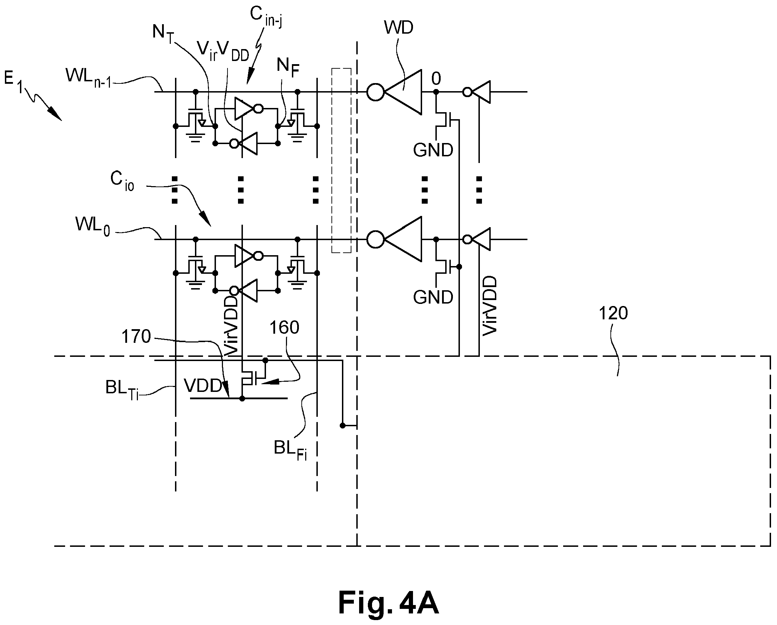

Différentes manières de placer dans un « état métastable » un premier ensemble E1 de cellules dont la structure interne est conventionnelle et comme décrite précédemment en liaison avec la figure 3 sont illustrées sur les figures 4A-4C.

Pour ne pas surcharger ces figures, seule une colonne de cellules Ciₙ₋₁,...Cᵢ₀ du premier ensemble E1 est représentée. Les cellules Ciₙ₋₁,...Cᵢ₀ sont ici mises dans un état métastable en déconnectant ou en laissant déconnectée une ligne d'alimentation haute VirVDD des cellules mémoires.

Dans l'exemple illustré sur la figure 4A, un élément interrupteur 160, typiquement sous forme d'un transistor, dans cet exemple de type PMOS, est disposé entre la ligne d'alimentation haute VirVDD et l'alimentation générale du plan mémoire, par exemple véhiculée par une grille ou une ligne 170 d'alimentation mise à un potentiel VDD.

En fonction de l'état d'un signal de commande (non représenté) émis par un circuit de contrôle 120, l'élément interrupteur 160 est configuré pour connecter ou déconnecter la ligne haute d'alimentation virVDD de l'alimentation 170. La déconnexion est réalisée ici lorsque le transistor 160 est rendu bloqué. Le premier inverseur INV1 et le deuxième inverseur INV2 ne sont alors pas alimentés. Les noeuds internes N_{T} et N_{F} des cellules Ciₙ₋₁,...Cᵢ₀ s'établissent alors typiquement à un même potentiel ou sensiblement à un même potentiel, correspondant ici typiquement à la masse. Par sensiblement à un même potentiel on entend qui diffère de moins de 10 mV.

Dans ce cas, là aussi les cellules sont dans un état métastable de sorte que l'on ne peut pas distinguer un quelconque état logique en accédant aux noeuds des cellules.

Une autre manière de placer les cellules dans un état métastable est d'égaliser les noeuds internes N_{F}, N_{T} des cellules mémoires.

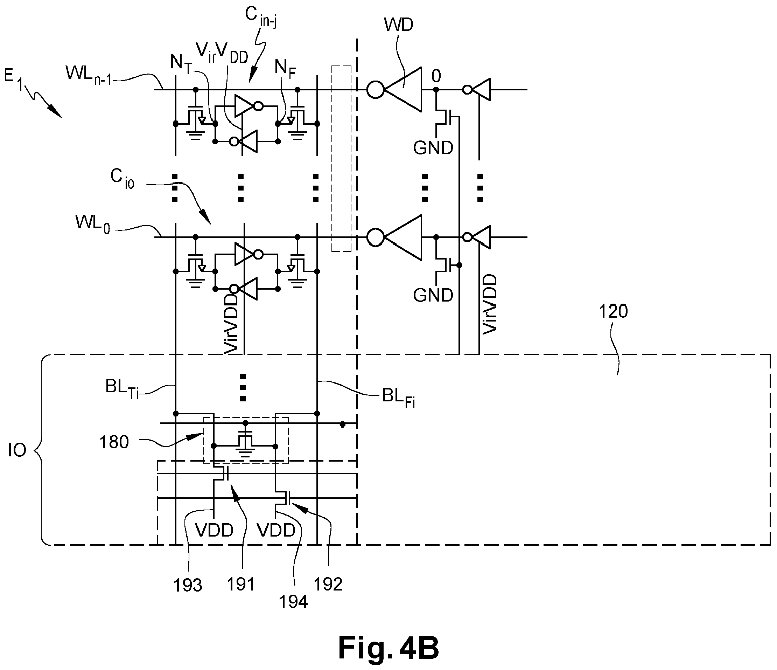

Dans l'exemple de réalisation particulier illustré sur la figure 4B, l'égalisation des noeuds N_{F}, N_{T} des cellules de la i-éme colonne est réalisée en connectant ensemble les lignes de bit BLTi et BLFi et en couplant les lignes de bit BLTi et BLFi à ces noeuds N_{F}, N_{T} à travers les transistors d'accès TA_{T} et TA_{F}. Les transistors d'accès sont ainsi dans cet exemple activés (i.e. rendus passants) par le biais des lignes de mots WL₀...WLₙ₋₁ pour permettre l'égalisation des noeuds NF, NT.

Un élément commutateur 180, formé par exemple d'un transistor 180, ici de type N, peut être prévu entre les lignes de bit BLTi et BLFi.

Ainsi, en fonction de l'état d'un signal appliqué sur la grille de ce transistor 180, on peut alternativement connecter ensemble les lignes de bit BLTi et BLFi lorsqu'on souhaite réaliser une mise dans un mode de fonctionnement dans lequel les cellules sont placées dans un état métastable ou bien déconnecter l'une de l'autre les lignes de bit BLTi et BLFi pour permettre l'établissement des noeuds NF, NT à des valeurs respectives différentes l'une de l'autre dans un autre mode fonctionnement, par exemple où l'on souhaite lire les données stockées par les cellules du premier ensemble.

Lorsque les lignes de bits BLTi et BLFi sont connectées entre elles, ces lignes de bits BLTi et BLFi, peuvent également être isolées de lignes de polarisation 193, 194 mises par exemple au potentiel VDD d'un circuit périphérique au plan mémoire et qui peut être situé à une extrémité de la colonne de cellules, généralement en pied de colonne. Un élément interrupteur 191 est ainsi prévu pour permettre alternativement d'assurer le couplage ou le découplage entre la première ligne de bit BLTi et une première ligne de polarisation 193. De même, un élément interrupteur 192 est prévu pour permettre alternativement d'assurer le couplage ou le découplage entre la deuxième ligne de bit BLF et la deuxième ligne de polarisation 194. Dans l'exemple illustré, ces éléments interrupteurs sont sous forme de transistors 191, 192 de couplage par exemple de type PMOS. Les interrupteurs éléments interrupteurs 191 et 192 peuvent être utilisés et éventuellement activés lors d'une opération d'initialisation

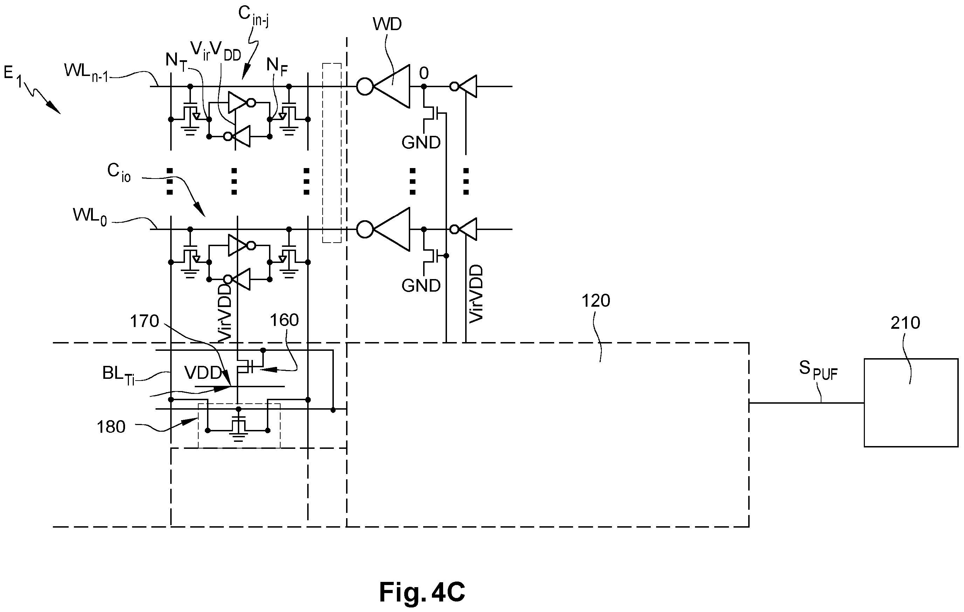

Un mode de réalisation préféré pour placer les cellules dans un état métastable tout en limitant la consommation de la matrice est illustré sur la figure 4C.

Il prévoit, pour mettre les cellules en état métastable, à la fois une égalisation des noeuds internes N_{F}, N_{T} (ici lorsque l'élément commutateur 180 est rendu passant) et un maintien des cellules sans alimentation (ici lorsque l'élément interrupteur 160 est rendu bloqué). Le dispositif diffère ainsi de celui décrit précédemment avec la figure 4B de par la commande supplémentaire de l'élément interrupteur 160 pour ne plus alimenter les cellules lorsqu'elles sont mises dans l'état métastable.

Un circuit de contrôle 120 produisant notamment les signaux de commande des interrupteurs 160, 180 et d'activation des transistors appliqués aux lignes de mots WL₀,...,WLₙ₋₁ est représenté de manière schématique sur les figures 4A-4C. Il peut être formé d'un ensemble de portes logiques et peut comprendre également une ou plusieurs bascule(s), et/ou multiplexeur(s), et/ou étage(s) à retard.

Dans l'exemple illustré sur la figure 4C le circuit 120 est destiné notamment à recevoir en entrée un ou plusieurs signaux provenant d'un module 210 contrôleur de PUF. Le module 210 contrôleur de PUF peut être sous forme d'un circuit numérique dédié ou bien sous forme d'une fonction numérique réalisée par un processeur. Le passage d'un mode de fonctionnement dans lequel les cellules sont dans un état métastable à un mode de fonctionnement dans lequel on peut accéder aux cellules en lecture, et éventuellement pour d'autres opérations, peut être déclenché notamment par un signal S_{PUF} de demande d'accès au premier ensemble E1 de cellules.

Ainsi, lorsqu'on souhaite accéder à des données d'identification ou d'authentification de la mémoire relatives au PUF (« Physically Unclonable Function ») servant de signature numérique ou d'empreinte numérique de la mémoire, le module contrôleur 210 de PUF transmet au circuit de commande le signal S_{PUF}. Ce signal S_{PUF} permet de déclencher la réalisation de diverses opérations dont notamment au moins une opération d'initialisation libre des noeuds internes des cellules du premier ensemble E1 et éventuellement une initialisation biaisée telle que décrite infra. Lors de ces opérations d'initialisation, les noeuds internes N_{T}, N_{F} des cellules s'établissent à des potentiels respectifs distincts, d'où il résulte que des valeurs sont stockées en mémoire dans la zone PUF et qu'il est possible de les lire.

Une phase d'initialisation consiste donc à faire passer une cellule mémoire d'un état « indéterminé » (et indéterminable par lecture) ou « métastable » à un état avec une valeur mémorisée « déterminée » (et donc déterminable par lecture). Une phase d'initialisation peut être réalisée lors d'une mise sous tension du dispositif mémoire ou à la suite d'une opération d'effacement ayant par exemple été déclenchée à la suite d'une détection d'accès frauduleux à la mémoire. Ainsi, on peut se référer à une première demande de brevet FR, n°1761692, déposée le 6 décembre 2017 dans laquelle un mécanisme d'effacement rapide est décrit.

On peut se référer également à une deuxième demande de brevet français n°2111286 déposée par la demanderesse le 25 Octobre 2021 devant l'Institut National de la Propriété Intellectuelle dans laquelle différents mécanismes d'initialisation sont décrits.

Un mode d'initialisation dit « libre », consiste à laisser chaque cellule mémoire s'initialiser à une valeur propre lors de la mise sous tension progressive des éléments constituants la cellule mémoire, notamment les deux inverseurs rebouclés (voir supra en lien avec les figures 2 et 3), sans chercher à imposer de valeur « 0 » ou « 1 » sur les noeuds internes N_{T} et N_{F} de la cellule. Dans le mode d'initialisation libre, les transistors d'accès TA_{T} et TA_{F} sont tout d'abord non passants, et on met la ligne d'alimentation haute VirVdd au potentiel d'alimentation Vdd afin d'alimenter le premier inverseur et le deuxième inverseur.

Par opposition, un mode d'initialisation dit déterministe consiste à imposer ou forcer une valeur à mémoriser par la cellule lors de son passage d'un état indéterminé à un état déterminé. Pour imposer une valeur pendant l'initialisation, le dispositif mémoire comprend en pied de colonne des moyens pour imposer une valeur sur les noeuds internes des cellules en cours d'initialisation, via les lignes de bits et en rendant conducteurs les transistors d'accès de des cellules concernées. Dans cette deuxième demande de brevet, la valeur d'initialisation que l'on souhaite imposer peut-être « 0 » ou « 1 ». Les moyens d'initialisation déterministe décrits dans cette deuxième demande, notamment en lien avec la figure 4, permettent d'écrire toutes les cellules mémoire soit à « 0 » soit à « 1 ». Pour ce faire, le dispositif prévoit de piloter, pour chaque colonne, une des lignes de bits BL_{T} ou BL_{F} en la connectant à une tension d'alimentation par mise en conduction d'un transistor de sélection de ligne de bits. La ligne de bits sélectionnée et alimentée tend ainsi à imposer une valeur « 1 » sur un des noeuds de chaque cellule mémoire reliée à cette ligne de bits.

Dans cette deuxième demande de brevet, il est également décrit un mode d'initialisation biaisé en lien avec sa figure 6. Dans ce mode d'initialisation biaisé, comme pour une initialisation déterministe, on assure une polarisation différente entre la première ligne de bit BLT et la deuxième ligne de bit BLF tout en activant les transistors d'accès TA_{T} et TA_{F} des cellules initialisées. Au lieu d'appliquer une tension Vdd ou Gnd sur les lignes de bit BL_{T} et BL_{F} pour « forcer » une valeur d'initialisation, on applique plutôt une tension Vdd sur l'une des lignes de bits et Vdd-ΔV sur l'autre ligne de bit. Alternativement, on peut appliquer une tension Gnd sur l'une des lignes de bit et Gnd+ΔV sur l'autre ligne de bits. Ainsi, dans le mode d'initialisation biaisé, on cherche uniquement à « déséquilibrer » les cellules mémoire en favorisant le basculement de chaque cellule mémoire vers une valeur mémorisée prédéfinie (« 1 » ou « 0 »), mais sans forcer à coup sûr le basculement des cellules mémoire vers cet état prédéfini. L'intérêt de ce mode d'initialisation biaisé est qu'il permet de détecter rapidement les cellules qui s'initialisent naturellement (lors d'une initialisation libre) à « 1 » ou à « 0 » avec une probabilité élevée. Autrement dit, si une cellule a par exemple une probabilité élevée de s'initialiser à « 1 » lors d'une initialisation libre, elle pourra tout de même s'initialiser à « 1 » lors d'une initialisation biaisé favorisant l'écriture à « 0 », en « résistant » davantage au déséquilibre qu'une autre cellule mémoire qui présenterait une probabilité plus faible de s'initialiser à « 1 » lors d'une initialisation libre.

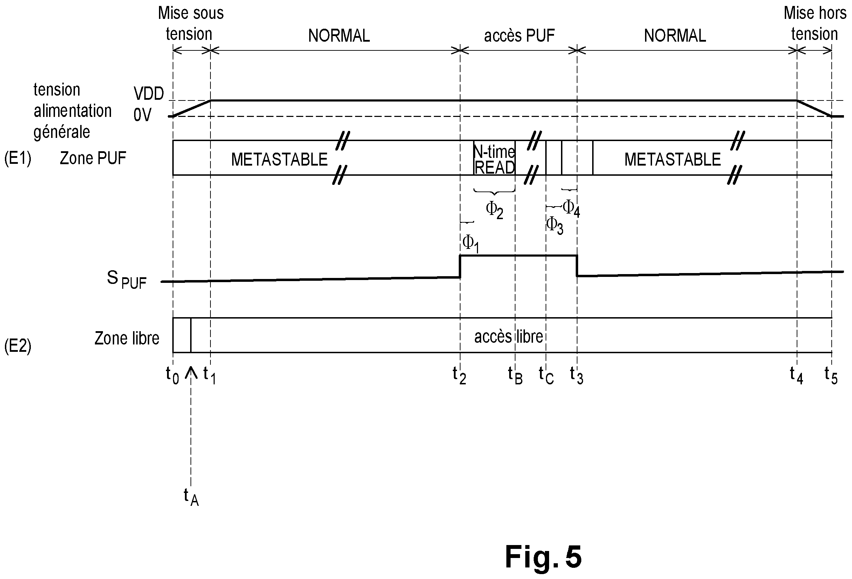

La figure 5 donne un exemple de chronogramme de fonctionnement d'un dispositif mémoire tel que décrit précédemment. L'échelle de temps sur ce chronogramme n'est pas représentée de manière linéaire, le rapport des durées respectivement entre les instants t1 et t2 et entre les instants t2 et 3 étant typiquement beaucoup plus important que sur cette représentation schématique.

A la mise sous tension de la matrice qui se traduit par exemple d'un passage de 0 à VDD d'une grille ou ligne conductrice 170 entre un instant t0 et un instant t1, les cellules du premier ensemble E1 sont de préférence maintenues dans un état métastable. Pour ce faire, leur ligne d'alimentation haute VirVdd est déconnectée de cette grille ou ligne conductrice 170 et/ou leurs noeuds internes N_{T} et N_{F} sont connectés l'un à l'autre, par exemple en activant leurs transistors d'accès TA_{T} et TA_{F} et en connectant entre elles les lignes de bits BLTi, ..., BLFi par le biais de l'élément de commutation 180. Les noeuds internes N_{T} et N_{F} des cellules du premier ensemble sont alors maintenus à des potentiels égaux ou sensiblement égaux (i.e. à des valeurs qui diffèrent de moins de 10 mV). Un circuit de lecture, par exemple doté d'amplificateur de détection en pied de colonne n'est alors pas susceptible de détecter la différence de potentiels entre les noeuds internes N_{T} et N_{F} des cellules du premier ensemble.

On note qu'une initialisation des cellules permettant de maintenir un état métastable des cellules durant la mise sous tension (entre t0 et t1) nécessite de prévoir un dispositif de contrôle du dispositif mémoire assurant un l'équivalent d'un court-circuit entre les noeuds internes NT et NF de chacune des cellules. Pour ce faire, le circuit de contrôle du dispositif mémoire peut utiliser tout ou partie des moyens de « court-circuit » ou « d'effacement » décrits en relation avec les figures 2 à 4.

Alternativement, il est possible de laisser les cellules mémoire de l'ensemble E1 s'initialiser de façon libre, comme cela est classiquement réalisé. On peut également prévoir, selon une autre variante, que les cellules mémoire de l'ensemble E1 soient initialisées, lors de cette phase de mise sous tension (entre t0 et t1), selon un mode d'initialisation déterministe, par exemple pour mettre toutes les cellules à « 0 » ou « 1 ».

Concomitamment, les cellules du deuxième ensemble E2 sont alimentées, donc avec leur ligne d'alimentation haute connectée à la grille ou ligne conductrice 170. Les cellules de cet ensemble E2 vont s'initialiser selon le mode d'initialisation prévu pour la mise sous tension. Ainsi, on peut par exemple prévoir que les cellules de l'ensemble E2 auront une initialisation libre en prévoyant que les noeuds internes des cellules du deuxième ensemble soient isolés les uns des autres et s'établissent alors à des potentiels différents l'un de l'autre, de sorte qu'un circuit de lecture lisant les cellules après initialisation (après t1) est susceptible de détecter la différence de potentiels entre les noeuds internes N_{T} et NF. Alternativement, il est possible que l'initialisation des cellules de l'ensemble E2 soient initialisées à des valeurs prédéfinies en utilisant un dispositif d'initialisation déterministe par exemple tel que celui décrit dans la deuxième demande susmentionnée.

Durant une phase entre un instant t1 et un instant t2, le dispositif se trouve dans un mode de fonctionnement dit « normal », qui correspond à une majorité du temps global de fonctionnement de la matrice lorsqu'elle est alimentée, par exemple d'au moins 99% et dans cet exemple 99.9% du temps où la grille conductrice d'alimentation est alimentée et mise ainsi à la tension d'alimentation VDD. Dans ce mode de fonctionnement, les cellules du premier ensemble E1 sont maintenues dans leur état métastable tandis que les cellules du deuxième ensemble E2 sont maintenues accessibles en lecture/écriture ce, en particulier tant qu'aucun accès frauduleux n'est détecté.

Puis, à partir instant t2, une autre phase dite « d'accès PUF », est déclenchée. Le déclenchement de cette phase peut être initié par le module 210 contrôleur de PUF qui, par le biais du signal S_{PUF} qui change d'état permet de déclencher le passage dans un deuxième mode de fonctionnement des cellules du premier ensemble E1.

Ce deuxième mode de fonctionnement peut être en particulier un mode de fonctionnement dans lequel on souhaite accéder aux cellules du premier ensemble afin de réaliser une procédure d'enrôlement pour déterminer les cellules que l'on souhaite utiliser pour créer une signature numérique et/ou une clef de cryptage (PUF), ou afin de lire une signature numérique et/ou une clef d'encryptage contenue dans certaines cellules de ce premier ensemble E1 (la procédure d'enrôlement ayant déjà été réalisée).

On note, comme cela est connu de l'homme de l'art, qu'une procédure d'enrôlement pour recherche de PUF requiert typiquement de réaliser un grand nombre d'initialisations libres de la zone PUF E1 afin d'établir une statistique pour chaque cellule établissant une probabilité d'initialisation libre à « 1 » ou « 0 ». Suite à la réalisation de cette statistique, on réaliser un choix de cellules pour former le PUF en retenant les cellules présentant les probabilités les plus élevées de s'initialiser librement à « 1 » ou à « 0 ».

Comme cela est décrit dans la deuxième demande de brevet susmentionnées, l'utilisation d'une initialisation biaisée permet d'accélérer cette recherche et de limiter le nombre d'initialisation à réaliser pour établir la statistique.

Une fois le PUF établi, après une procédure d'enrôlement, il est possible de prévoir une unique interrogation de la zone PUF ou encore de requérir un « challenge » consistant, comme cela est connu de l'homme de l'art, à faire une initialisation libre de la zone PUF et à récupérer les valeurs des cellules préalablement identifiées pour former la réponse au challenge et délivrer une valeur secrète.

On décrit ci-après, en relation avec la figure 5, un exemple de déroulé d'opérations pendant un accès PUF autorisé, entre les instants t2 et t3. Lors de cet accès PUF, on cherche dans cet exemple à réaliser une procédure d'enrôlement de PUF.

Pour cet accès au PUF, on initialise (phase Φ1) les cellules du premier ensemble E1, par exemple en effectuant une initialisation « libre ». Pour cela, les transistors d'accès sont alors non passants et on déconnecte entre elles les lignes de bits BLTi, ..., BLFi par le biais de l'élément de commutation 180 rendu bloqué. On rend l'élément interrupteur 160 passant de sorte à connecter la ligne d'alimentation haute VirVdd à la grille d'alimentation. Alternativement, on peut prévoir que la première initialisation des cellules mémoire lors d'un accès PUF soit réalisé selon un accès déterministe pour des raisons de sécurité.

Lors d'une phase Φ2, on va chercher à définir les cellules que l'on retient pour former le PUF in fine. On réalise ainsi des opérations successives d'initialisation, libres ou biaisées comme expliqué précédemment. Entre deux initialisations, il est nécessaire de procéder à une opération d'effacement en utilisant l'un des procédés d'effacement décrit précédemment.

Durant la phase d'accès PUF, une tentative d'accès frauduleux à la mémoire peut être éventuellement détectée. Un module de détection d'accès frauduleux peut être alors prévu pour transmettre au circuit de commande un signal de détection d'accès frauduleux permettant de déclencher à nouveau le passage des cellules dans un état métastable.

Un tel module de détection d'accès frauduleux peut être doté de fonctions semblables à celles d'un module TAMP présent dans un microcontrôleur STM32GO commercialisé par la société STMicroelectronics et décrit dans la notice « STM32GO - TAMP, tamper and back-up registers, revision 1.0 ». Ainsi, entre les instants t_{B} et te, les cellules du premier ensemble E1 peuvent être placées à nouveau dans un état métastable par égalisation de ses noeuds internes et/ou extinction de leur alimentation.

Si l'opération de recherche de signature n'est pas terminée et doit se poursuivre on reprend le processus de recherche comprenant des opérations d'initialisation et d'effacement des cellules du premier ensemble E1 (phase Φ3)

Un nouveau changement d'état du signal transmis S_{PUF} par le module 210 contrôleur de PUF peut à partir d'un instant t3 permettre de revenir dans un mode de fonctionnement « normal » dans lequel les cellules du premier ensemble sont mises à nouveau dans l'état métastable. Ce changement d'état du signal S_{PUF} intervient notamment à la fin d'une opération d'enrôlement ou à la fin d'une opération « d'interrogation » ou de « challenge » de la zone PUF.

En dehors des moments d'accès autorisés à la zone PUF, les cellules de la mémoire PUF sont donc maintenues dans un état métastable dans la présente invention. L'intérêt de maintenir les cellules dans un état métastable est de supprimer, *a minima* de réduire très fortement, le phénomène de NBTI décrit précédemment. Ainsi, la zone PUF est protégée contre les effets du vieillissement et sa fiabilité est bien plus grande et maintenue dans le temps.

## Revendications

1. Dispositif de mémoire statique à accès aléatoire comprenant une matrice mémoire (M) dotée de cellules mémoires SRAM chacune desdites cellules dudit ensemble comprenant un premier noeud (N_{T}) de stockage et un deuxième noeud (N_{F}) de stockage, le dispositif étant doté en outre d'un circuit de commande (160, 180, 120, T₁) desdites cellules configuré pour, lors d'une phase de mise sous de la matrice (M), mettre un premier ensemble (E1) de cellules situé dans une première zone (Z1) de la matrice dans un état indéterminé dit « métastable » pour lequel leur premier noeud (N_{T}) de stockage et leur deuxième noeud (N_{F}) de stockage respectifs sont mis à des potentiels égaux ou sensiblement égaux tandis qu'un deuxième ensemble (E2) de cellules situé dans une deuxième zone (Z2) de la matrice (M) distincte de la première zone (Z1) sont initialisées dans un état déterminé dans lequel leurs premier noeud (N_{T}) et deuxième noeud (N_{T}) respectifs sont à des potentiels respectifs différents entre un état bas, correspondant en particulier à un état logique donné '0', et un état haut, correspondant à un état logique complémentaire '1', puis consécutivement à cette phase de mise sous tension mettre la matrice dans un premier mode de fonctionnement dans lequel le premier ensemble (E1) de cellules de la première zone (Z1) est maintenu dans l'état « métastable » tandis que les cellules de la deuxième zone sont maintenues accessibles en lecture et en écriture.

2. Dispositif de mémoire statique à accès aléatoire selon la revendication 1, dans lequel le premier ensemble (E1) de cellules contient une fonction physique non clonable (PUF).

3. Dispositif de mémoire statique à accès aléatoire selon l'une des revendications 1 ou 2, dans lequel consécutivement à la mise sous tension de la matrice (M) au moins une grille ou ligne conductrice (170) est mise à un potentiel d'alimentation (Vdd) et dans lequel le circuit de commande est doté d'au moins un élément interrupteur (160) apte, alternativement à connecter ou déconnecter une ligne d'alimentation (VirVdd) de cellules dudit premier ensemble à ladite grille ou ligne conductrice (170), et dans lequel les cellules sont mises dans l'état métastable en déconnectant la ligne d'alimentation (VirVdd) de ladite grille ou ligne conductrice (170).

4. Dispositif de mémoire statique à accès aléatoire selon l'une des revendications 1 à 3, dans lequel les cellules du premier ensemble (E1) sont mises dans ledit état « métastable » par mise en connexion l'un à l'autre de leurs premier et deuxième noeuds de stockage respectifs.

5. Dispositif de mémoire statique à accès aléatoire selon l'une des revendications 1 à 4, dans lequel chaque cellule dudit premier ensemble est dotée :
- d'un premier inverseur (INV1) et d'un deuxième inverseur (INV2) connectés de façon croisée entre ledit premier noeud de stockage et ledit deuxième noeud de stockage, le premier inverseur et/ou le deuxième inverseur étant connectés à une ligne d'alimentation (VirVdd) dite « haute » pouvant être mise à un potentiel d'alimentation (VDD),
- d'un premier transistor d'accès (TA_{T}) au premier noeud (N_{T}) de stockage et d'un deuxième transistor d'accès (TA_{F}) au deuxième noeud (N_{F}) de stockage, le premier transistor d'accès et le deuxième transistor d'accès étant respectivement connectés à une première ligne de bit (BL_{T}) et à une deuxième ligne (BL_{F}),
le circuit de commande est doté d'au moins un élément commutateur (180) apte, alternativement à connecter entre elles ou à déconnecter l'une de l'autre la première ligne de bit et la deuxième ligne de bit, les cellules du premier ensemble étant mises dans l'état dit « métastable » par ledit circuit de commande en activant les transistors d'accès et en connectant l'une à l'autre la première ligne de bit avec la deuxième ligne de bit.

6. Dispositif de mémoire statique à accès aléatoire selon l'une des revendications 1 à 5, comprenant en outre un module (210) destiné à produire une signature numérique et/ou une clef d'encryptage à partir de données mémorisées dans des cellules dudit premier ensemble de cellules, ledit module (210) étant apte à produire un signal (S_{PUF}) de demande d'accès au premier ensemble de cellules, le circuit de commande étant configuré pour consécutivement à la réception dudit signal (S_{PUF}) de demande d'accès, mettre les cellules dudit premier ensemble de cellules dans un état permettant une opération de mémorisation d'une valeur après une opération d'initialisation et dans un état d'accessibilité en lecture, en :
- isolant l'un de l'autre le premier noeud (N_{T}) du deuxième noeud (N_{T}) de chaque cellule du deuxième ensemble ou,
- appliquant un potentiel d'alimentation (Vdd) aux cellules du premier ensemble, ou
- isolant le premier noeud (N_{T}) du deuxième noeud (N_{T}) de chaque cellule du premier ensemble tout en appliquant un potentiel d'alimentation (Vdd) aux cellules du premier ensemble.

7. Dispositif de mémoire statique à accès aléatoire selon la revendication 6 lorsque rattachée à la revendication 5, dans lequel les cellules dudit premier ensemble de cellules sont initialisées librement en désactivant leur premier transistor d'accès (TA_{T}) et deuxième transistor d'accès (TA_{F}) tout en mettant la ligne d'alimentation haute (VirVdd) au potentiel d'alimentation (VDD) afin d'alimenter leur premier inverseur et leur deuxième inverseur.

8. Dispositif de mémoire statique à accès aléatoire selon la revendication 7, dans lequel le circuit de commande (160, 180, 120, T₁) est configuré pour consécutivement à une détection d'un signal d'accès frauduleux, mettre ou remettre le premier ensemble (E1) de cellules situé dans une première zone (Z1) de la matrice dans ledit état métastable.

9. Dispositif de mémoire statique à accès aléatoire selon l'une des revendications 1 à 8, comprenant en outre un module de détection d'accès frauduleux prévu pour transmettre au circuit de commande un signal de détection d'accès frauduleux et dans lequel dans le premier mode de fonctionnement, les cellules du deuxième ensemble sont maintenues accessibles en lecture et en écriture tant qu'aucun signal de détection d'accès frauduleux n'est détecté.

10. Dispositif de mémoire statique à accès aléatoire selon l'une des revendications 1 à 9, dans lequel le deuxième ensemble de cellules contient un sous-ensemble de cellules dans lequel des données sensibles sont stockées ou aptes à être stockées.

11. Procédé de commande d'un dispositif mémoire statique à accès aléatoire selon l'une des revendications 1 à 10, comprenant des étapes de :
- mise sous tension de la matrice,
- placement de la matrice dans le premier mode de fonctionnement, puis,
- lecture d'une signature numérique et/ou d'une clef d'encryptage contenue dans certaines cellules dudit premier ensemble (E1) de cellules.

12. Procédé de commande selon la revendication 11, dans lequel la lecture de la signature numérique ou de la clef d'encryptage comprend une phase dite « phase d'accès PUF », le procédé comprenant en outre consécutivement à une détection d'une tentative d'accès frauduleux à la mémoire lors de ladite phase d'accès PUF une étape de : - placement à nouveau des cellules du premier ensemble dans ledit état métastable.

13. Procédé de commande selon l'une des revendications 11 ou 12, dans le premier mode de fonctionnement des cellules du premier ensemble dans lequel les cellules du premier ensemble sont dans ledit état métastable est maintenu tant qu'une lecture d'une signature numérique et/ou d'une clef d'encryptage n'est pas réalisée.
